# EUROPEAN PATENT SPECIFICATION

(11) **EP 1 962 620 B1**
(45) Date of publication and mention of the grant of the patent: **10.07.2013**
(21) Application number: 06829612.8
(22) Date of filing: 07.12.2006
(51) Int. Cl.: A23L 1/40, A23L 1/00

(54) **PACKAGED CONCENTRATE FOR PREPARING A BOUILLON, SOUP, SAUCE, GRAVY OR FOR USE AS A SEASONING, THE CONCENTRATE COMPRISING XANTHAN AND LOCUST BEAN GUM**
VERPACKTES KONZENTRAT ZUR HERSTELLUNG EINER BOUILLON, SUPPE, SAUCE, BRATENSAUCE ODER ALS WÜRZE, WOBEI DAS KONZENTRAT XANTHAN UND JOHANNISBROTGUMMI ENTHÄLT
CONCENTRÉ POUR PRÉPARER DU BOUILLON, SOUPE, SAUCE OU POUR ÊTRE UTILISÉ COMME CONDIMENT

(30) Priority: 12.12.2005 EP 05077842; 07.06.2006 EP 06115093
(43) Date of publication of application: 03.09.2008
(73) Proprietor: Unilever N.V., 3013 AL Rotterdam (NL); Unilever PLC, London EC4Y 0DY (GB)
(72) Inventor: ACHTERKAMP, Georg, 74074 Heilbronn (DE); ACKERMANN, Dieter, Kurt, Karl, 74074 Heilbronn (DE); INOUE, Chiharu, NL-3133 AT Vlaardingen (NL); KOHLUS, Reinhard, 74074 Heilbronn (DE); KUHN, Matthias, 74074 Heilbronn (DE)
(74) Representative: Reijns, Tiemen Geert Pieter
(86) International application number: PCT/EP2006/012059
(87) International publication number: WO 2007/068482

(56) References cited:
- WO-A-01/11994
- WO-A-02/35944
- WO-A-97/48290
- US-A- 5 013 573
- US-A- 5 593 716
- US-A- 6 086 937
- US-A1- 2003 044 503
- US-A1- 2004 151 806
- KOVACS P: "USEFUL INCOMPATIBILITY OF XANTHAN GUM WITH GALACTOMANNANS" FOOD TECHNOLOGY, INSTITUTE OF FOOD TECHNOLOGISTS, CHICAGO, IL, US, vol. 27, no. 3, March 1975 (1975-03), pages 26-28,30, XP001057341 ISSN: 0015-6639

## Description

### Field of the invention

The present invention relates to concentrates for preparing a bouillon, broth, soup, sauce, gravy or for use as a seasoning. More in particular, the invention relates to such concentrates in the form of a jelly.

### Background of the invention

Concentrates for preparing a bouillon, broth, soup, sauce, gravy, or for use as seasoning are well known in the western and non-western cooking. For brevity, such formulations are herein all abbreviated to "concentrates for preparing a bouillon", or "bouillon concentrates".

Conventionally, bouillon concentrates comprise ingredients such as one or more of salt, sugar, flavour enhancers (like e.g. monosodium glutamate, MSG), herbs, spices, vegetable particulates, colourants and flavourants, next to e.g. 0-40% (for seasoning cubes 1-60%, for seasonings and bouillon cubes typically 0-20%) fat and/or oil. Salt is usually an ingredient which is present in large amounts, e.g. 5-60%.

The most common physical formats in which such concentrates are available are powders, granulates and cubes or tablets. The powders can be prepared by mixing all ingredients in the proper proportion, optionally followed by granulating to obtain granulates using equipment known in the art. The conventional bouillon and seasoning cubes are prepared by mixing the ingredients, followed by pressing to a cube. Alternatively, cubes or tablets can be prepared by mixing all ingredients followed by extruding and cutting the extrudate. The powders and granulates are generally offered in sachets or jars, the cubes usually individually wrapped and packed in a box.

Liquid concentrates for bouillons, soups, sauces etcetera do also exist. They have the advantage that e.g. liquid extracts or concentrates of herbs, vegetables, meat etcetera can be included.

There is a desire for concentrates for preparing a bouillon, broth, soup, sauce, gravy, or for use as seasoning, which combine some advantages of liquid concentrates with some advantages of dry concentrates.

JP 61/031,068 discloses soup concentrates for use with instant noodles, which soup concentrate is in the form of a jelly, which concentrate needs to be dilluted 5-6 times with water to yield a soup to be consumed or served with noodles. Said jellies are formed with gelatin in combination with one or more of alginate, agar and apple puree. The jellies take 3-6 minutes to dissolve. The jellies disclosed have some disadvantages.

US2003/044503 discloses a self-sustaining composite product comprising an edible gel having one or
more flavoring and/or texturizing components distributed uniformly throughout. The product is not a concentrate product. US2003/044503 does not disclose products with a high salt level which are in the form of a gel and comprise 1-30% oil and/or fat.

WO02/35944 discloses a non-newtonian, thixotropic jelly drink (1) comprising fruit juice, sweeteners, acidity regulators and preservatives and gelling agents. The jelly drink is not a concentrate products. It does not comprise high salt levels, oil and/or fat.

Kovacs P, Food technotogy, vol.27, No. 3, march 1975, p 26-28, 30 relates to the incompatibility of xanthan gum with galactomannans. An interaction is described between xanthan gum and locust bean gum at low salt levels.

WO01/11994 discloses a flavored solid-form roux composition that is easily dispersible in aqueous liquids comprising an edible fat, an edible starchy material, a flavoring agent, a solidifying agent, aqueous liquid; and optionally edible bicarbonate.

US 2004/151806 discloses a dry mix soup comprising per serving a dry mix of at least 7 grams of protein, at least 2 grams of fiber and 250 calories or less. The salt level of this dry composition is low.

US6086937 discloses a composition, which is preferably fat continuous, of a scoopable or spoonable consistency for the preparation of sauces by addition of water and heating, comprising 5-80 parts by
weight of fat, 0.5-15 parts by weight of water dispersible milk ingredients, 1-20 parts by weight of starch or a starch-like product, up to 40 parts by weight of water, taste and/or flavor compounds, and, optionally, 0.25-5 parts by weight of gelatin or similar hydrocolloid.

US5593716 discloses a liquid sauce, soup or gravy product having high temperature, shear and storage stability and having a smooth texture comprising an aqueous phase and an oil phase. The aqueous phase includes a dispersed phase of non-starch polysaccharide microgel and a continuous phase comprising a bio polymer solution.

WO97/48290 discloses a method for preparing shelf-stable, condensed cream soup products by mixing a condensed cream soup with from about 0.5 to about 5.0 wt.% of a cook-up starch, from about 3.0 to about 8.0 wt.% of a gelling agent, from about 0.0 to about 5.0 wt.% of a filling starch, and from about 0.0 to about 4.0 wt.% of a wheat flour, where the weight percentages are based on the weight of the product. The mixture is then thermally-processed in an agitator retort with agitation at a temperature and for a time sufficient to sterilize the mixture and form a shelf-stable, condensed cream soup.

US5013573 relates to spreads having a good microbiological stability and a fresh dairy taste are produced from demineralized, deacidified milk of pH 2.5 to 6.0. The demineralized, deacidified milk is preferably obtained by electrodialysis of fermented milk.

### Summary of the invention

There is a need for packaged concentrates for use as seasoning or for preparing a bouillon, broth, soup, sauce, or gravy, which concentrate is in the form of a (packaged) jelly, which jelly can dissolve in boiling water fairly quickly (e.g. a mass of 30 g would dissolve in 900 ml boiling water in less than 3.5 minutes, preferably less than 3 minutes). It is also preferred that such jelly has a low tendency to syneresis (water separation) and is preferably an elastic, not too rigid gel (as such will facilitate removal from its packaging; elastic and not too rigid can best be judged by hand-feel). Also it is desired that preferably the gel is not too sticky (as such gel is likely to be handled by fingers and to allow easy removal from the packaging), and a simple method for manufacturing such (e.g. not too viscous in preparation, or requiring more complex equipment or processing). Preferably, the concentrates should be such that they allow the usual dilution rates (in e.g. an aqueous liquid such as water) for e.g. bouillons (e.g. as in bouillon cubes) like 1:20-1-50 (i.e. allows for high salt levels in the gel). Also, the product should be fairly stable in transport and storage, which is normally at ambient temperatures, but during which temperatures can rise substantially higher. Preferably, the gel should also have a certain strenghth: preferably the strength should be such that the force (in gram) necessary for a plunger to penetrate 10 mm in a gel is above 50, preferably above 70 g. Also low to no phase separation is desired.

It has now been found that such may be achieved (at least in part) by a packaged concentrate for preparing a bouillon, broth, soup, sauce, gravy or for use as a seasoning, 0.5-60% (weight % based on the total composition) of taste imparting components, as in claim 1.

Water (as amount) is herein to be understood as the total amount of moisture present. The concentration of salt is to be calculated as (amount of salt) / (amount of salt + total moisture). The same is true for other dissolved matter, such as gelling agent (amount gelling agent) /(amount gelling agent + total moisture).

With "herbs, vegetables, fruits, meat, fish, crustaceans, or particulates thereof" (in connection to the preferred absence of 0.5-60% by weight as stated above) is meant particles having a size such that they are at least visible to the naked eye, in the product as consumed, e.g. upon dillution with water in the required dillution rate (as that is when the particulates or herbs etcetera matter: to be seen just prior to consumption). Thus, "meat powder" as known in the bouillon industry can be difficult to be seen in the jelly cube (e.g. due to the concentration, possible turbidity following certain ingredients), but such conventional meat powder particulates are well visible to the naked eye in the soup or bouillon when prepared in the proper dillution. The packaged concentrates according to this invention do not comprise 0.5-60% of such "herbs, vegetables, fruits, meat, fish, crustaceans, or particulates thereof" according to the definition given just above.

The person of average skill in the art of food products recognizes a gel when he or she sees one. The appearance of a gel generally can be achieved in an aqueous environment when sufficient gelling agents are used in the formulation. A gel will usually have a smooth surface appearance, be shape-retaining at ambient temperature when exposed to gravity, but easily deformable (to some degree in an elastic way). More preferably, the packaged concentrate according to the invention (when taken out of the packaging) has the appearance or rheology of a gel as expressed by a ratio of elastic modulus G' : viscous modulus G" of at least 1, preferably at least 3, more preferably at least 5. It can furthermore be preferred that the viscous modulus G" is at least 10 Pa, preferably at least 50 Pa. The method of measuring such is described below.

### Detailed description of the invention

In the formulation as set out above, it can be preferred that the concentrate comprises 20-30% (weight % based on water content of concentrate) salt, even more preferably the concentrate according to the present invention comprises 20-26% (weight % based on water content of concentrate) salt. "Salt" in this context can be sodium chloride but it can also be another alkali metal salt such as potassium chloride, or a mixture thereof, or other low-sodium products that aim for the taste impression of sodium chloride, as long as the taste in the end formulation is acceptable. The upper limit of solubility in water of NaCl is around 26% (at room temperature), and hence above this limit some salt crystals may occur. Hence, the amount of salt is preferably (just) below this salt saturation concentration level.

The concentrates are more or less shape stable: it is not an easily flowable product, but it being a gelled product means it can deform (easily) under pressure. By choosing the amount and ratio of xanthan and LBG the desired rheology can be obtained.

The amount and ratio of xanthan and LBG as required will e.g. depend on the amount of salt in the formulation, and such amounts and ratio can be determined by the person of average skill in the art of gelled food products without undue burden. Locust bean gum and xanthan on their own at high salt levels do not really gel, but in combination they do. Typical amounts will be:
- at a salt level of 15%: LBG + xanthan (together): 0.15-5%, more preferably 0.4-2%,
- at a salt level of 25%: LBG + xanthan (together): 0.2-7%, more preferably 0.6-3%,
both as wt% on the amount of water as defined above.

LBG and xanthan are herein preferably used in such amounts that the total amount of LBG+xanthan comprises 30-70% LBG and 30-70% xanthan (wt% on total amount of xanthan+LBG). Preferably, these amounts are 40-60% and 60-40%, respectively, and even more preferred 45-55% and 55-45%, respectively. Most preferred ratio is each component in an amount of about 50% and 50%.

In the concentrates according to the invention, it is preferred that the taste-imparting components comprise one or more of liquid or dissolvable extracts or concentrates of one or more of meat, fish, herbs, fruit or vegetables, and/or flavours, and/or yeast extract, and/or hydrolysed protein of vegetable-, soy-, fish-, or meat origin. In the above, where it says "meat" this is to be understood to comprise beef, pork, chicken (and other fowl). Preferably the amount of taste-imparting components as set out above is 1-40% (by weight on the total packed concentrate).

The packaged concentrate according to the present invention may further comprising 0.5 to 30% (weight on total concentrate) of a taste enhancer selected from the group of monosodium glutamate, 5'-ribotides, organic acids, or mixtures thereof. It may also be preferred that the packaged concentrate according to the present invention further comprises 1-30%, preferably 1-15% (weight on total packaged concentrate) of emulsified or dispersed oil and/or fat. Salt can also be seen as a taste enhancer, but is herein regarded as a separate category of ingredients.

For the packaged concentrate according to the present invention, it is preferred that the total moisture content of the concentrate is 20-60% by weight (based on the total packed concentrate), preferably 40-60% by weight (based on the total packed concentrate). Also, it is preferred that the packaged concentrate according to the invention has a water activity a_{w} of preferably 0.7-0.78, most preferably 0.7-0.75. Preferably, the pH of the concentrate is between 5 and 9, preferably 5-7.

Depending on the ingredients and processing chosen, the concentrate according to the present invention is shelf stable for at least 3 months when in its intact packaging at ambient temperature. Preferably, the concentrate according to the present invention has an open shelf life of at least 3 months at ambient temperature.

The packaged concentrates according to the present invention are preferably translucent or transparent. This can also make it attractive to choose e.g. packaging which is at least partially transparent.

The invention further relates to a process for the preparation of the concentrates according to the present invention. A process for the preparation may comprise the steps of mixing the ingredients with the water, filling into the packaging (e.g. blister packs or cups or tubs) and closing the packs (e.g. by a seal), whereby preferably a heating step is applied prior to, during or after filling into the packaging, for preservation purposes and/or to facilitate dissolution of ingredients and/or achieving gelation (upon cooling thereafter) of thermoset gels. Alternatively, the (heated) mixture may be poured in moulds, cooled to set. After setting to a gel, the gelled concentrate will have to be removed from the moulds and packaged. It is preferred, however, to manufacture directly into the packaging. It is preferred that the steps of mixing the ingredients with the water, filling into the packaging and closing the packaging, whereby a heating step is applied prior to, and/or during and/or after filling into the packaging.

In the above process, it is preferred that at least part of the heating stage is to a temperature of at least 80°C. Also, it is preferred that the temperature of the mixture during the filling is at least 70°C. When fat is used solid at room temperature, it is preferably melted first before adding to other components.

By manufacturing the packaged concentrates according to the present invention, e.g. by the process as set out above, it was found that concentrates for preparing a bouillon, broth, soup, sauce, gravy or for use as a seasoning could be obtained that are in gel form, are quickly dispersible/dissolvable (e.g. 30 g in less than 3.5 minutes preferably in less than 3 minutes, when immersed in 900 ml boiling water), are non-sticky, show a low tendency to syneresis, and can be made in such a way that they can be used in the dillution rates usual for bouillon concentrates (e.g. 1:20-1:50).

Typical shapes in which the product according to the invention may be made comprise shapes such as is in the form of a cube, tablet, pellet, ball, briquette, dragee, cone, truncated cone, or in the shape of (the profile or projection or portrait of) an animal or part thereof (e.g. animal head). Due to the formulation and the subsequent manner of manufacturing, complex shapes are possible.

As the concentrates are jelly-like, they can have a shape. Preferably, the concentrate according to the invention is in the form of a cube, tablet, brick-shape, pellet, ball (sphere), briquette, dragee, egg-shape, or flattened egg-shape. It is herein to be understood that "cubes or tablets" and "unit dose" encompass a wide variety of geometric shapes: next to cubes and tablets also pellets, briquettes, brick-like shapes, etcetera. Each individual gelled concentrate preferably is of a size such that the concentrate has a weight (excluding packaging) of 1-10 kg, preferably 2-250 g, more preferably 10-50 g. The portion of the concentrate according to the present invention as packaged is preferably such that the concentrate has a weight excluding packaging) of 1-10 kg, preferably 2-250 g, more preferably 10-50 g. The packaging can be e.g. a blister pack or a glass or plastic jar or (sealed) tubs or cups. Preferably, in the packaged concentrate according to the invention the container is a cup or tub with a seal, but also more complex packaging shapes are now possible (e.g. a reclosable pack). A specific and preferred packaging option are sealed or reclosable cups or tubs (e.g. plastic cups e.g. having a volume of 1-250 ml, comprising 1-250 g, preferably 2-50 g (more preferably 10-50 g) concentrate, which are closed with a lid or seal, preferably a seal of sheet-like material).

In the formulation as set out above the concentrate comprises 15-30% (weight % based on water content of concentrate) salt, more preferably the concentrate according to the present invention comprises 15-26% (weight % based on water content of concentrate) salt. "Salt" in this context can be sodium chloride but it can also be another alkali metal salt such as potassium chloride, or a mixture thereof, or other low-sodium products that aim for the taste impression of sodium chloride, as long as the taste in the end formulation is acceptable.

The invention further relates to the use of a concentrate as set out above, for preparing a bouillon, broth, soup, sauce, gravy or for use as a seasoning. This may be done by diluting with an aqueous liquid (e.g. water) under application of heat, in e.g. a ratio of 1:15 - 1:100, preferably 1:20 - 1:70, more preferably 1:20 - 1:50.

The packaged concentrates described herein are preferably non-sweet, which is characterised by a sweetness as an equivalent to a percentage sucrose of lower than 20%, preferably lower than 15%, even more preferably lower than 10%, most preferably lower than 6%, and resulting in an end-product that is lower in sweetness than 0.5g/l of sucrose equivalent, preferably below 0.3 g/l of sucrose equivalent, more preferably below 0.2 g/l of sucrose equivalent. The sweetness refers to an equivalent sweetness to sucrose that is calculated via the sweetness index of the used sweeteners. Thus, the concentrate according to the invention has a sweetness as expressed by a sweetness index of below 0.5 g / liter sucrose equivalent, preferably below 0.3 g/l of sucrose equivalent, more preferably below 0.2 g/l of sucrose equivalent. The equivalent amount to sucrose refers to an equivalent sweetness to sucrose as it is calculated via the sweetness index of the used sweeteners.

As used herein, "sweetness index" is a term used to describe the level of sweetness of the dosage form relative to sucrose. Sucrose, defined as the standard, has a sweetness index of 1. For example, the sweetness indices of several known sweet compounds are listed below: Sorbitol 0.54-0.7, Dextrose 0.6, Mannitol 0.7, Sucrose 1.0, High Fructose Corn Syrup 55% 1.0, Xylitol 1.0, Fructose 1.2-1.7, Cyclamate 30, Aspartame 180, Acesulfame K 200, Saccharin 300, Sucralose 600, Talin 2000-3000. Further values and reference literature can be found e.g. in "Römpp Lebensmittelchemie, Georg Thieme Verlag, 1995".

It can also be preferred that by equivalent sweetness is herein understood the perceived sweetness by a consumer as determined by a trained panel matching the product sweetness to a standard sucrose solution. The detailed method is described in the appropriate DIN standard. For recipe design purposes this shall be assumed similar to the sweetness as calculated by the so called sweetness index.

The texture or rheology desired for the product according to the invention is preferably that of a gel. Regarding a gel, in scientific literature, e.g. "Das Rheologie Handbuch, Thomas Mezger, Curt R. Vincentz-Verlag, Hannover, 2000" a gel is typically defined by its ratio of elastic modulus G' to viscous modulus G". This allows it to distinguish between a highly viscous fluid, e.g. a paste and an elastic system of same viscosity e.g. a jelly. This ratio should be greater than 1 for a gel. For the given product, a ratio of greater than 1 is suitable. It is preferred, however, that said ratio is greater than 3, more preferably it is greater than 5.

The absolute value of the viscous modus G" is preferably greater than 10 Pa, more preferred greater than 50 Pa. This criterion distinguishes between thin solutions with gel character and a more shape retaining jelly products that are the intended products according to this invention.

The above given values need should be measured under the following circumstances:
- a maturation time of at least 12 h under ambient conditions,
- measurement temperature of 25 °C,
- an oscillatory frequency of 1 rad/s and
- a strain of 1%.

This set of parameters refers to a standard oscillatory test conducted with a standard state of the art low deformation rheometer as commercially available from e.g. Bohlin or TA Instruments.

The requirements as stated herein for G' : G" should preferably apply to the whole concentrate, and not just for a part of it. Also, it is preferred that the concentrate does not consist of a solid envelope material covering core. It can also be preferred that the concentrate is translucent and/or transparent.

The concentrate according to the present invention is preferably shelf stable when in its intact packaging. This can be ensured by selecting the appropriate manufacturing process in combination with a correct composition. For example, a process involving a pasteurising step (either explicitly or as part of other process steps), followed by hot or aseptic filling of packaging, and the right water activity a_{w} and pH of the composition may ensure such.

The invention further relates to the use of the concentrate according to the present invention and as set out above for preparing a bouillon, broth, soup, sauce, gravy or for use as a seasoning. Such use e.g. implies removing the concentrate from its packaging, and adding it to food or a dish, either during or after its preparation, optionally further applying heat and/or stirring the food or dish with such concentrate.

**Examples 1-4**: several bouillon concentrates have been prepared with varying taste according to the recipes as described below. Moisture was added as water, all other ingredients are used in a dry form (that is: commercially dry, which usually means for such ingredients 1-3% of moisture). The a_{w} and G'and G"have been measured: these results are given after example 4. All four products appeared as gels. Although these examples refer to products that contain 0.5-60% particulates that can be seen by the naked eye, which is not preferred in the present case, it is submitted that such particles in the present examples do not substantially alter properties like G', G", water activity, dissolving time, dillution rates, and syneresis.

### Example 1: Beef Jelly with LBG+xanthan

| Description | Amount [%] | Amount [g] for 10kg |
|---|---|---|
| Sugar | 2 | 0.2 |
| Salt | 18.4 | 1.84 |
| Flavour | 4.9 | 0.49 |
| Citric Acid powder | 0.5 | 0.05 |
| Vegetable powder | 0.45 | 0.045 |
| Yeast extract | 1.5 | 0.15 |
| Spices | 0.2 | 0.02 |
| 5'-ribotides | 0.2 | 0.02 |
| MSG | 5.1 | 0.51 |
| Palm fat | 10.5 | 1.05 |
| Water | 55.38 | 5.535 |
| Xanthan | 0.3 | 0.03 |
| Locus Bean Gum | 0.3 | 0.03 |
| Total | 100 | 10 |

### Process Description:

1. Mix all dry ingredients in a Hobart Mixer till homogeneous
2. Melt fat at 60°C
3. Add melted fat to the dry ingredients and mix in the Hobart mixer until homogeneous
4. Add mix into a double jacket vessel (Unimix type)
5. Add water into the vessel and close the vessel.
6. Heat up to 90°C while stirring
7. Keep at 90°C for 3min while stirring
8. Hot filling into oval tubs of 35ml size, followed by sealing and leaving to cool to room temperature.

### Example 2: Fish Jelly with LBG+xanthan

| Description | Amount [%] | Amount [g] for 10kg |
|---|---|---|
| Fish powder | 8 | 0.8 |
| Flavour | 0.5 | 0.05 |
| Palm fat | 5.8 | 0.58 |
| Creamer powder | 16.1 | 1.61 |
| Spices | 0.1 | 0.01 |
| Lactid acid (liquid) | 0.6 | 0.06 |
| Water | 40 | 4 |
| Modified starch | 3.5 | 0.35 |
| Salt | 13.1 | 1.31 |
| MSG | 4.4 | 0.44 |
| Locus Bean Gum | 0.5 | 0.05 |
| Xanthan | 0.5 | 0.05 |
| Sugar | 6.6 | 0.66 |
| 5'-ribotides | 0.2 | 0.02 |
| Caramel powder | 0.1 | 0.01 |
| Total | 100 | 10 |

### Process Description:

1. Mix all dry ingredients in a Hobart Mixer till homogeneous
2. Melt fat at 60°C
3. Add melted fat to the dry ingredients and mix in the Hobart mixer until homogeneous
4. Add mix into a double jacket vessel (Unimix type)
5. Add water and lactic acid into the vessel and close the vessel.
6. Heat up to 90°C while stirring
7. Keep at 90°C for 3min while stirring
8. Hot filling into oval tubs of 35ml size, followed by sealing and leaving to cool to room temperature.

### Example 3: Chicken Jelly (LBG+xanthan)

| Description | Amount [%] | Amount [g] for 10kg |
|---|---|---|
| Chicken extract | 3.2 | 0.32 |
| Chicken meat powder | 7.3 | 0.73 |
| Chicken fat | 16.1 | 1.61 |
| Spices | 0.4 | 0.04 |
| Water | 44.4 | 4.44 |
| Flavour | 1.3 | 0.13 |
| Salt | 17.3 | 1.73 |
| MSG | 4 | 0.4 |
| Locus Bean Gum | 0.5 | 0.05 |
| Xanthan | 0.5 | 0.05 |
| Sugar | 4.8 | 0.48 |
| 5'-ribotides | 0.2 | 0.02 |
| Total | 100 | 10 |

### Process Description:

1. Mix all dry ingredients in a Hobart Mixer till homogeneous
2. Melt fat at 60°C
3. Add melted fat to the dry ingredients and mix in the Hobart mixer until homogeneous
4. Add mix into a double jacket vessel (Unimix type)
5. Add water and lactic acid into the vessel and close the vessel.
6. Heat up to 90°C while stirring
7. Keep at 90°C for 3min while stirring
8. Hot filling into round tubs of 15ml size, followed by sealing and leaving to cool to room temperature.

### Example 4: Pork Jelly with LBG+xanthan

| Description | Amount [%] | Amount [g] for 10kg |
|---|---|---|
| Pork Flavour | 1.5 | 0.15 |
| Water | 41.5 | 4.15 |
| Pork fat | 12.1 | 1.21 |
| Pork meat powder | 6.1 | 0.61 |
| Salt | 13.6 | 1.36 |
| MSG | 5.3 | 0.53 |
| Locus Bean Gum | 0.5 | 0.05 |
| Xanthan | 0.5 | 0.05 |
| Sugar | 3.8 | 0.38 |
| Palm fat | 3 | 0.3 |
| Pork bone powder | 12.1 | 1.21 |
| Total | 100 | 10 |

### Process Description:

1. Mix all dry ingredients in a Hobart Mixer till homogeneous
2. Melt fat at 60°C
3. Add melted fat to the dry ingredients and mix in the Hobart mixer until homogeneous
4. Add mix into a double jacket vessel (Unimix type)
5. Add water into the vessel and close the vessel.
6. Heat up to 90°C while stirring
7. Keep at 90°C for 3min while stirring
8. Hot filling into round tubs of 15ml size, followed by sealing and leaving to cool to room temperature

Results examples 1-4: ratio G' / G" at 21°C (ambient, as measured following the instructions in the description):

| Recipe | Storage modulus G' (Pa) | Loss modulus G" (Pa) | Ratio G'/G" | a_{w} | Dillution rate | Dillution time (s) | syneresis |
|---|---|---|---|---|---|---|---|
| | | | | | | | |
| Beef | 75.48 | 14.41 | 5.24 | 0.68 | 28 | 90 | Low |
| Fish | 1061.50 | 186.70 | 5.69 | 0.74 | 26 | 180 | Very low |
| Chicken | 187.50 | 39.55 | 4.74 | 0.73 | 29 | 120 | Low |
| Pork | 466.29 | 100.38 | 4.65 | 0.73 | 30 | 90 | Very low |

The gel strength was measured using the following method:
- using a texture analyser from Microstable Sytems, model TA XT2 with 5 kg load cell.
- Plunger: Diameter (according AOAC method) 0.5 inches means 12.7 mm, height 35 mm, plane surface, sharp edges, material plastics.
- Sample Containers have an influence on results if not very large. Therefore the choosen container should always be the same. We have used plastic containers for model systems (diameter bottom 5.5 cm; diameter top 6.5 cm; height 8.5 cm) and glass jars for process trials with recipes other than model systems (diameter 7 cm; height 4 cm).
- After preparation, samples have been stored at ambient conditions (21°C) at least over night before measurement.
- TA-Parameters: Pre speed 1 mm/s, Test speed 0.5 mm/s, Re speed 10 mm/s, Distance 15 mm, Trigger Auto, Force 0.5 g, Stop recording at target. Result we take from the recorded graph is force at 10 mm penetration depth (should be in N, but simplified in g).

## Claims

1. Packaged concentrate for preparing a bouillon, broth, soup, sauce, gravy or for use as a seasoning, said concentrate comprising:
- 20-80% water (weight % based on total packaged concentrate),
- 0.1 % to 10% (weight % based on water content of concentrate) of a gelling agent comprising the combination of xanthan and locust bean gum (LBG), whereby the concentration of gelling agent is to be calculated as (amount of gelling agent) / (amount of gelling agent + total moisture),
- 15-30% (weight % based on water content of concentrate, preferably 15-26%) of salt, whereby the concentration of salt is to be calculated as (amount of salt) / (amount of salt + total moisture),
- 1-30% (weight on total packaged concentrate) of emulsified or dispersed oil and/or fat,
- 0.5-60% (weight % based on the total composition) of taste imparting components in the absence of 0.5-60% by weight of herbs, vegetables, fruits, meat, fish, crustaceans, or particulates thereof (weight % based on total packaged concentrate), and wherein the concentrate
• and has the appearance of a gel, and
• has a water activity a_{w} of 0.5 to 0.87.

2. Packaged concentrate according to claim 1, wherein xanthan and LBG are each present in an amount of 30-70% on the total amount of xanthan + LBG.

3. Packaged concentrate according to claim 1 or 2, wherein the concentrate has the rheology of a gel.

4. Packaged concentrate according to claim 1-3, wherein the concentrate has the appearance or rheology of a gel as expressed by a ratio of elastic modulus G' : viscous modulus G" of at least 1, preferably at least 3, more preferably at least 5.

5. Packaged concentrate according to claim 1-4, wherein viscous modulus G" is at least 10 Pa, preferably at least 50 Pa.

6. Packaged concentrate according to claim 1-5, wherein the amount of a gelling agent comprising the combination of xanthan and locust bean gum (LBG) is 0.2-7%, preferably 0.6-7%, more preferably 0.6-3%, whereby the concentration of gelling agent is to be calculated as (amount of gelling agent) / (amount of gelling agent + total moisture).

7. Packaged concentrate according to claim 1-6, wherein xanthan and LBG each being present in an amount of 40-60% on the total amount of xanthan + LBG, preferably in an amount of 45-55%, more preferably an amount of about 50%.

8. Packaged concentrate according to claim 1-7, wherein the taste-imparting components comprise one or more of liquid or dissolvable extracts or concentrates of one or more of meat, fish, herbs, fruit or vegetables, and/or flavours, and/or yeast extract, and/or hydrolysed protein of vegetable-, soy-, fish-, or meat origin.

9. Packaged concentrate according to any one of claims 1-8, wherein the salt is sodium chloride.

10. Packaged concentrate according to any one of claims 1-9, wherein the gelling agent consists essentially of the combination of xanthan and locust bean gum (LBG).

11. Packaged concentrate according to any one of claims 1-10, wherein the taste imparting components comprise meat extract.

12. Packaged concentrate according to claim 1-11, wherein the total moisture content of the concentrate is 40-60% by weight (based on the total packed concentrate).

13. Packaged concentrate according to claim 1-12, wherein the concentrate has a water activity a_{w} of 0.7-0.78.

14. Packaged concentrate according to claim 1-13, further comprising 0.5 to 30% (weight on total concentrate) of a taste enhancer selected from the group of monosodium glutamate, 5'-ribotides, organic acids, or mixtures thereof.

15. Packaged concentrate according to claim 1-14 comprising 1-15% (weight on total packaged concentrate) of emulsified or dispersed oil and/or fat.

16. Packaged concentrate according to claim 1-15, wherein the concentrate is packaged in a cup or tub with a seal, preferably in a sealed cup.

17. Packaged concentrate according to claim 1-16, wherein the portion of the concentrate as packaged is such that the concentrate has a weight (excluding packaging) of 2g-10kg, preferably 2g-250g, more preferably 10g-250g.

18. Packaged concentrate according to claim 1-17, wherein concentrate provides a bouillon, broth, soup, sauce, gravy by diluting said concentrate with an aqueous liquid under application of heat, preferably in a ratio of 1:15-1:50, preferably of 1:20-1:50.

19. Packaged concentrate according to claim 1-18, whereby 30 g of the concentrate dissolves in 900 ml boiling water in less than 3.5 minutes, preferably less than 3 minutes.

20. Packaged concentrate according to claim 1-19, wherein the concentrate is a concentrated bouillon.

21. Packaged concentrate according to claim 1-19, wherein the concentrate is a concentrate for use as a seasoning.

22. Packaged concentrate according to claim 20, wherein the concentrated bouillon provides a bouillon by diluting said concentrated bouillon with an aqueous liquid under application of heat, said concentrated bouillon comprising:
- 20-80% water (weight % based on total packaged concentrate),
- 0.1-10% (weight % based on water content of concentrate) of a gelling agent comprising the combination of xanthan and locust bean gum (LBG), whereby the concentration of gelling agent is to be calculated as (amount of gelling agent) / (amount of gelling agent + total moisture),
- 15-30% (weight % based on water content of concentrate, preferably 15-26%) of salt, whereby the concentration of salt is to be calculated as (amount of salt) / (amount of salt + total moisture),
- 1-30% (weight on total packaged concentrate) of emulsified or dispersed oil and/or fat,
- 0.5-60% (weight % based on the total composition) of taste imparting components,
in the absence of 0.5-60% by weight of herbs, vegetables, fruits, meat, fish, crustaceans, or particulates thereof (weight % based on total packaged concentrate), and
wherein the concentrate
• has the appearance or rheology of a gel as expressed by the ratio of elastic modulus G' : viscous modulus G" of at least 1,
• has a water activity a_{w} of 0.5 to 0.87, and
- wherein the portion of the concentrate as packaged is such that the concentrate has a weight (excluding packaging) of 2g-250g, preferably of 10g-250g.

23. Packaged concentrate according to claim 22, comprising 1-15% (weight on total packaged concentrate) of emulsified or dispersed oil and/or fat.

24. Packaged concentrate according to claim 22 or 23, wherein the concentrated bouillon provides a bouillon by diluting said concentrated bouillon with an aqueous liquid under application of heat in a ratio of 1:15-1:50, preferably of 1:20-1:50.

25. Packaged concentrate according to claim 1-24 wherein the salt is sodium chloride.

26. Packaged concentrate according to claim 1-25, wherein the gelling agent consists essentially of the combination of xanthan and locust bean gum (LBG).

27. Process for preparing a concentrate for preparing a bouillon, broth, soup, sauce, gravy or for use as a seasoning, said concentrate comprising:
- 20-80% water (weight % based on total packaged concentrate),
- 0.1% to 10% (weight % based on water content of concentrate, preferably 0.2-7%, more preferably 0.6-3%) of a gelling agent comprising the combination of xanthan and locust bean gum (LBG), whereby the concentration of gelling agent is to be calculated as (amount of gelling agent) / (amount of gelling agent + total moisture),
- 15-30% (weight % based on water content of concentrate, more preferably 15-26%) of salt, whereby the concentration of salt is to be calculated as (amount of salt) / (amount of salt + total moisture),
- 1-30% (weight on total packaged concentrate) of emulsified or dispersed oil and/or fat,
- 0.5-60% (weight % based on the total composition) of taste imparting components in the absence of 0.5-60% by weight of herbs, vegetables, fruits, meat, fish, crustaceans, or particulates thereof (weight % based on total packaged concentrate), and
wherein the concentrate
• has the appearance of a gel, and
• has a water activity a_{w} of 0.5 to 0.87, and
the process comprising the steps of mixing all ingredients, filling the mixture into the packaging or moulds, closing the packaging, whereby a heating step is applied prior to, and/or during and/or after filling into the packaging or moulds.

28. Process according to claim 27, wherein the concentrate is a concentrate according to claim 2-26.

29. Process according to claim 27 or 28, wherein at least part of the heating stage is to a temperature of at least 70°C.

30. Use of a concentrate according to claim 1-20 or 22-26, for preparing a bouillon.

31. Use according to claim 30, wherein the concentrate is a concentrated bouillon and provides a bouillon by diluting said concentrated bouillon with an aqueous liquid under application of heat, said concentrated bouillon comprising:
- 20-80% water (weight % based on total packaged concentrate);
- 0.1-10%; preferably 0.2% to 7% (weight % based on water content of concentrate) of a gelling agent comprising the combination of xanthan and locust bean gum (LBG), whereby the concentration of gelling agent is to be calculated as (amount of gelling agent) / (amount of gelling agent + total moisture),
- 15-30% (weight % based on water content of concentrate, preferably 15-26%) of salt, whereby the concentration of salt is to be calculated as (amount of salt) / (amount of salt + total moisture),
- 1-30% (weight on total packaged concentrate) of emulsified or dispersed oil and/or fat,
- 0.5-60% (weight % based on the total composition) of taste imparting components in the absence of 0.5-60% by weight of herbs, vegetables, fruits, meat, fish, crustaceans, or particulates thereof (weight % based on total packaged concentrate), and wherein the concentrate
• has the appearance or rheology of a gel as expressed by the ratio of elastic modulus G" : viscous modulus G" of at least 1, and
• has a water activity a_{w} of 0.5 to 0.87, and
- wherein the portion of concentrate as packaged is such that the concentrate has a weight (excluding packaging) of 2g-250g, preferably of 10 g-250 g

32. Use according to claim 31 wherein the concentrated bouillon comprises 1-15% (weight on total packaged concentrate) of emulsified or dispersed oil and/or fat.

33. Use according to claim 32 or 33, wherein the concentrated bouillon provides a bouillon by diluting said concentrated bouillon with an aqueous liquid under application of heat in a ratio of 1:15 - 1:50, preferably 1:20 - 1:50.

34. Use of a concentrate according to claims 1-26 for use as a seasoning, whereby said use includes removing the concentrate from its packaging, and adding it to food or a dish, either during or after its preparation, further applying heat and stirring the food or dish with such concentrate.

## Patentansprüche

1. Abgepacktes Konzentrat zur Herstellung einer Bouillon, Brühe, Suppe, Soße, eines Bratensafts oder zur Verwendung als Würzmittel, wobei das Konzentrat umfasst:
- 20 bis 80 % Wasser (Gew.-%, bezogen auf das gesamte abgepackte Konzentrat),
- 0,1 bis 10 % (Gew.-%, bezogen auf den Wassergehalt des Konzentrats) eines Geliermittels, das die Kombination aus Xanthan- und Johannisbrotkerngummi (locust bean gum LBG)) umfasst, wobei die Konzentration an Geliermittel als (Menge an Geliermittel) / (Menge an Geliermittel und Gesamtfeuchtigkeit) zu berechnen ist,
- 15-30 % (Gew.-%, bezogen auf den Wassergehalt des Konzentrates, vorzugsweise 15-26 %) Salz, wobei die Konzentration an Salz als (Menge an Salz) / (Menge an Salz + Gesamtfeuchtigkeit) zu berechnen ist,
- 1-30 % (Gew.-%, bezogen auf das gesamte abgepackte Konzentrat) emulgiertes oder dispergiertes Öl und/oder Fett,
- 0,5-60 % (Gew.-%, bezogen auf die gesamte Zusammensetzung) an Geschmack verleihenden Komponenten
in Abwesenheit von 0,5-60 Gew.-% Kräutern, Gemüsen, Früchten, Fleisch, Fisch, Crustaceen oder partikelartigem Material (Gew.-%, bezogen auf das gesamte abgepackte Konzentrat)
und wobei das Konzentrat
■ das Aussehen eines Gels hat und
■ eine Wasseraktivität a_{w} von 0,5 bis 0,87 hat.

2. Abgepacktes Konzentrat gemäß Anspruch 1, wobei Xanthan und LBG jeweils in einer Menge von 3-70 %, bezogen auf die Gesamtmenge an Xanthan + LBG, vorliegen.

3. Abgepacktes Konzentrat gemäß Anspruch 1 oder 2, wobei das Konzentrat die Rheologie eines Gels hat.

4. Abgepacktes Konzentrat gemäß Anspruch 1-3, wobei das Konzentrat das Aussehen oder die Rheologie eines Gels, wie ausgedrückt durch ein Verhältnis von Elastizitätsmodul G': viskosem Modul G" von wenigstens 1, vorzugsweise wenigstens 3, insbesondere wenigstens 5, hat.

5. Abgepacktes Konzentrat gemäß Anspruch 1-4, wobei der viskose Modul G" wenigstens 10 Pa, vorzugsweise wenigstens 50 Pa, ist.

6. Abgepacktes Konzentrat gemäß Anspruch 1-5, wobei die Menge eines Geliermittels, das die Kombination aus Xanthan- und Johannisbrotkerngummi (LBG) umfasst, 0,2-7 %, vorzugsweise 0,6-7 %, insbesondere 0,6-3 % ist, wobei die Konzentration an Geliermittel als (Menge an Geliermittel) / (Menge an Geliermittel + Gesamtfeuchtigkeit) zu berechnen ist.

7. Abgepacktes Konzentrat gemäß Anspruch 1-6, wobei Xanthan und LBG jeweils in einer Menge von 40-60 %, bezogen auf die Gesamtmenge an Xanthan + LBG, vorzugsweise in einer Menge von 45-55 %, insbesondere einer Menge von etwa 50 %, vorliegen.

8. Abgepacktes Konzentrat gemäß Anspruch 1-7, wobei die Geschmack verleihenden Komponenten eines oder mehrere von flüssigen oder lösbaren Extrakten oder Konzentraten von einem oder mehreren von Fleisch, Fisch, Kräutern, Früchten oder Gemüsen und/oder Aromastoffen und/oder Hefeextrakt und/oder hydrolysiertem Protein mit pflanzlicher, Soja-, Fisch- oder Fleisch-Herkunft umfassen.

9. Abgepacktes Konzentrat gemäß einem der Ansprüche 1-8, wobei das Salz Natriumchlorid ist.

10. Abgepacktes Konzentrat gemäß einem der Ansprüche 1-9, wobei das Geliermittel im Wesentlichen aus der Kombination aus Xanthan- und Johannisbrotkerngummi (LBG) besteht.

11. Abgepacktes Konzentrat gemäß einem der Ansprüche 1-10, wobei die Geschmack verleihenden Komponenten Fleischextrakt umfassen.

12. Abgepacktes Konzentrat gemäß Anspruch 1-11, wobei der Gesamtfeuchtigkeitsgehalt des Konzentrats 40-60 Gew.-% (bezogen auf das gesamte abgepackte Konzentrat) ist.

13. Abgepacktes Konzentrat gemäß Anspruch 1-12, wobei das Konzentrat eine Wasseraktivität a_{w} von 0,7-0,78 hat.

14. Abgepacktes Konzentrat gemäß Anspruch 1-13, das außerdem 0,5-30 % (Gew.-%, bezogen auf das gesamte Konzentrat) eines Geschmacksverstärkers, ausgewählt aus der Gruppe von Mononatriumglutamat, 5'-Ribotiden, organischen Säuren oder Gemischen davon, umfasst.

15. Abgepacktes Konzentrat gemäß Anspruch 1-14, das 1-15 % (Gew.-%, bezogen auf das gesamte abgepackte Konzentrat) emulgiertes oder dispergiertes Öl und/oder Fett umfasst.

16. Abgepacktes Konzentrat gemäß Anspruch 1-15, wobei das Konzentrat in einem Becher oder einem Bottich mit einer Versiegelung, vorzugsweise in einem versiegelten Becher, abgepackt ist.

17. Abgepacktes Konzentrat gemäß Anspruch 1-16, wobei die Portion des Konzentrats, wie sie abgepackt ist, so ist, dass das Konzentrat ein Gewicht (ausschließlich Verpackung) von 2 g - 10 kg, vorzugsweise 2 g - 250 g, insbesondere 10 g - 250 g, hat.

18. Abgepacktes Konzentrat gemäß Anspruch 1-17, wobei das Konzentrat eine Bouillon, Brühe, Suppe, Soße, einen Bratensaft bereitstellt, wobei das Konzentrat mit einer wässrigen Flüssigkeit unter Anwendung von Wärme, vorzugsweise in einem Verhältnis von 1:15 bis 1:50, insbesondere 1:20 bis 1:50, verdünnt wird.

19. Abgepacktes Konzentrat gemäß Anspruch 1-18, wobei 30 g des Konzentrates sich in weniger als 3,5 Minuten, vorzugsweise weniger als 3 Minuten, in 900 ml siedendem Wasser lösen.

20. Abgepacktes Konzentrat gemäß Anspruch 1-19, wobei das Konzentrat eine konzentrierte Bouillon ist.

21. Abgepacktes Konzentrat gemäß Anspruch 1-19, wobei das Konzentrat ein Konzentrat zur Verwendung als Würzmittel ist.

22. Abgepacktes Konzentrat gemäß Anspruch 20, wobei die konzentrierte Bouillon eine Bouillon durch Verdünnen der konzentrierten Bouillon mit einer wässrigen Flüssigkeit unter Anwendung von Wärme bereitstellt, wobei die konzentrierte Bouillon umfasst:
- 20 bis 80 % Wasser (Gew.-%, bezogen auf das gesamte abgepackte Konzentrat),
- 0,1 bis 10 % (Gew.-%, bezogen auf den Wassergehalt des Konzentrats) eines Geliermittels, das die Kombination aus Xanthan- und Johannisbrotkerngummi (LBG) umfasst, wobei die Konzentration an Geliermittel als (Menge an Geliermittel) / (Menge an Geliermittel und Gesamtfeuchtigkeit) zu berechnen ist,
- 15-30 % (Gew.-%, bezogen auf den Wassergehalt des Konzentrates, vorzugsweise 15-26 %) Salz, wobei die Konzentration an Salz als (Menge an Salz) / (Menge an Salz + Gesamtfeuchtigkeit) zu berechnen ist,
- 1-30 % (Gew.-%, bezogen auf das gesamte abgepackte Konzentrat) emulgiertes oder dispergiertes Öl und/oder Fett,
- 0,5-60 % (Gew.-%, bezogen auf die gesamte Zusammensetzung) an Geschmack verleihenden Komponenten
in Abwesenheit von 0,5-60 Gew.-% Kräutern, Gemüsen, Früchten, Fleisch, Fisch, Crustaceen oder partikelartigem Material (Gew.-%, bezogen auf das gesamte abgepackte Konzentrat)
und wobei das Konzentrat
■ das Aussehen oder die Rheologie eines Gels, wie ausgedrückt durch das Verhältnis von Elastizitätsmodul G': viskosem Modul G" von wenigstens 1 hat,
■ eine Wasseraktivität a_{w} von 0,5 bis 0,87 hat und
wobei die Portion des Konzentrats, wie sie abgepackt ist, so ist, dass das Konzentrat ein Gewicht (ausschließlich Verpackung) von 2 g bis 250 g, vorzugsweise von 10 g bis 250 g, hat.

23. Abgepacktes Konzentrat gemäß Anspruch 22, das 1-15 % (Gewicht, bezogen auf das gesamte abgepackte Konzentrat) emulgiertes oder dispergiertes Öl und/oder Fett umfasst.

24. Abgepacktes Konzentrat gemäß Anspruch 22 oder 23, wobei die konzentrierte Bouillon eine Bouillon durch Verdünnen der konzentrierten Bouillon mit einer wässrigen Flüssigkeit unter Anwendung von Wärme in einem Verhältnis von 1:15 bis 1:50, vorzugsweise von 1:20 bis 1:50, bereitstellt.

25. Abgepacktes Konzentrat gemäß Anspruch 1-24, wobei das Salz Natriumchlorid ist.

26. Abgepacktes Konzentrat gemäß Anspruch 1-25, wobei das Geliermittel im Wesentlichen aus der Kombination aus Xanthan- und Johannisbrotkerngummi (LBG) besteht.

27. Verfahren zur Herstellung eines Konzentrats zur Herstellung einer Bouillon, Brühe, Suppe, Soße, eines Bratensafts oder zur Verwendung als Würzmittel, wobei das Konzentrat umfasst:
- 20 bis 80 % Wasser (Gew.-%, bezogen auf das gesamte abgepackte Konzentrat),
- 0,1 bis 10 % (Gew.-%, bezogen auf den Wassergehalt des Konzentrats, vorzugsweise 0,2 - 7%, insbesondere 0,6 - 3 %) eines Geliermittels, das die Kombination aus Xanthan- und Johannisbrotkerngummi (LBG) umfasst, wobei die Konzentration an Geliermittel als (Menge an Geliermittel) / (Menge an Geliermittel und Gesamtfeuchtigkeit) zu berechnen ist,
- 15-30 % (Gew.-%, bezogen auf den Wassergehalt des Konzentrates, vorzugsweise 15-26 %) Salz, wobei die Konzentration an Salz als (Menge an Salz) / (Menge an Salz + Gesamtfeuchtigkeit) zu berechnen ist,
- 1-30 % (Gew.-%, bezogen auf das gesamte abgepackte Konzentrat) emulgiertes oder dispergiertes Öl und/oder Fett,
- 0,5-60 % (Gew.-%, bezogen auf die gesamte Zusammensetzung) an Geschmack verleihenden Komponenten
in Abwesenheit von 0,5-60 Gew.-% Kräutern, Gemüsen, Früchten, Fleisch, Fisch, Crustaceen oder partikelartigem Material (Gew.-%, bezogen auf das gesamte abgepackte Konzentrat)
und wobei das Konzentrat
■ das Aussehen eines Gels hat und
■ eine Wasseraktivität a_{w} von 0,5 bis 0,87 hat, und
wobei das Verfahren die Schritte des Mischens aller Ingredienzien, das Füllen des Gemisches in die Verpackung oder Formen, Schließen der Verpackung, wobei ein Erwärmungsschritt vor und/oder während und/oder nach Füllen in die Verpackung oder Formen angewendet wird, umfasst.

28. Verfahren gemäß Anspruch 27, wobei das Konzentrat ein Konzentrat gemäß Anspruch 2-26 ist.

29. Verfahren gemäß Anspruch 27 oder 28, wobei wenigstens ein Teil der Erwärmungsstufe auf eine Temperatur von wenigstens 70 °C ist.

30. Verwendung eines Konzentrats gemäß Anspruch 1-20 oder 22-26 zur Herstellung einer Bouillon.

31. Verwendung gemäß Anspruch 30, wobei das Konzentrat eine konzentrierte Bouillon ist und eine Bouillon durch Verdünnung der konzentrierten Bouillon mit einer wässrigen Flüssigkeit unter Anwendung von Wärme bereitstellt, wobei die konzentrierte Bouillon umfasst:
- 20 bis 80 % Wasser (Gew.-%, bezogen auf das gesamte abgepackte Konzentrat),
- 0,1 bis 10 % (Gew.-%, bezogen auf den Wassergehalt des Konzentrats) eines Geliermittels, das die Kombination aus Xanthan- und Johannisbrotkerngummi (LBG) umfasst, wobei die Konzentration an Geliermittel als (Menge an Geliermittel) / (Menge an Geliermittel und Gesamtfeuchtigkeit) zu berechnen ist,
- 15-30 % (Gew.-%, bezogen auf den Wassergehalt des Konzentrates, vorzugsweise 15-26 %) Salz, wobei die Konzentration an Salz als (Menge an Salz) / (Menge an Salz + Gesamtfeuchtigkeit) zu berechnen ist,
- 1-30 % (Gew.-%, bezogen auf das gesamte abgepackte Konzentrat) emulgiertes oder dispergiertes Öl und/oder Fett,
- 0,5-60 % (Gew.-%, bezogen auf die gesamte Zusammensetzung) an Geschmack verleihenden Komponenten
in Abwesenheit von 0,5-60 Gew.-% Kräutern, Gemüsen, Früchten, Fleisch, Fisch, Crustaceen oder partikelartigem Material (Gew.-%, bezogen auf das gesamte abgepackte Konzentrat)
und wobei das Konzentrat
■ das Aussehen eines Gels hat und
■ eine Wasseraktivität a_{w} von 0,5 bis 0,87 hat und
- die Portion des Konzentrats, wie sie verpackt ist, so ist, dass das Konzentrat ein Gewicht (ausschließlich Verpackung) von 2 g bis 250 g, vorzugsweise von 10 g bis 250 g, hat.

32. Verwendung gemäß Anspruch 31, wobei die konzentrierte Bouillon 1-15 % (Gew.-%, bezogen auf das gesamte abgepackte Konzentrat) emulgiertes oder dispergiertes Öl und/oder Fett umfasst.

33. Verwendung gemäß Anspruch 32 oder 33, wobei die konzentrierte Bouillon eine Bouillon durch Verdünnung der konzentrierten Bouillon mit einer wässrigen Flüssigkeit unter Anwendung von Wärme in einem Verhältnis von 1:15 bis 1:50, vorzugsweise 1:20 bis 1:50, bereitstellt.

34. Verwendung eines Konzentrats gemäß den Ansprüchen 1-26 zur Verwendung als Würzmittel, wobei die Verwendung Entfernen des Konzentrats aus seiner Verpackung und Zusetzen desselben zu einem Lebensmittel oder einer Mahlzeit, entweder während oder nach ihrer Herstellung, außerdem Anwenden von Wärme und Rühren des Lebensmittels oder der Mahlzeit mit einem solchen Konzentrat umfasst.

## Revendications

1. Concentré emballé pour la préparation de bouillons, consommés, soupes, sauces, jus ou pour l'utilisation comme condiment, ledit concentré comprenant :
- 20 à 80 % d'eau (% en poids par rapport au concentré emballé total),
- 0,1 % à 10 % (% en poids par rapport à la teneur en eau du concentré) d'un agent gélifiant comprenant la combinaison de gomme de xanthane et de gomme de caroube (LBG), où la concentration en agent gélifiant doit être calculée sous la forme (quantité d'agent gélifiant) / (quantité d'agent gélifiant + humidité totale),
- 15 à 30 % (% en poids par rapport à la teneur en eau du concentré, de préférence 15 à 26 %) de sel, où la concentration en sel doit être calculée sous la forme (quantité de sel) / (quantité de sel + humidité totale),
- 1 à 30 % (en poids par rapport au concentré emballé total) d'huile et/ou de graisse émulsifiée ou dispersée,
- 0,5 à 60 % (% en poids par rapport à la composition totale) de composants donnant du goût en l'absence de 0,5 à 60 % en poids d'herbes, de légumes, de fruits, de viande, de poisson, de crustacés, ou de particules de ceux-ci (% en poids par rapport au concentré emballé total), et dans lequel le concentré
• a l'apparence d'un gel et
• a une activité aqueuse a_{w} de 0,5 à 0,87.

2. Concentré emballé selon la revendication 1, dans lequel les gommes de xanthane et LBG sont chacune présentes en une quantité de 30 à 70 % par rapport à la quantité totale de xanthane + LBG.

3. Concentré emballé selon la revendication 1 ou 2, dans lequel le concentré possède la rhéologie d'un gel.

4. Concentré emballé selon les revendications 1 à 3, dans lequel le concentré a l'apparence ou la rhéologie d'un gel comme cela est exprimé par un rapport du module élastique G' : module visqueux G" d'au moins 1, de préférence d'au moins 3, plus préférentiellement d'au moins 5.

5. Concentré emballé selon les revendications 1 à 4, dans lequel le module visqueux G" est au moins de 10 Pa, de préférence d'au moins 50 Pa.

6. Concentré emballé selon les revendications 1 à 5, dans lequel la quantité d'un agent gélifiant comprenant la combinaison de xanthane et de gomme de caroube (LBG) est de 0,2 à 7 %, de préférence de 0,6 à 7 %, plus préférentiellement de 0,6 à 3 %, où la concentration de l'agent gélifiant doit être calculée sous la forme (quantité d'agent gélifiant) / (quantité d'agent gélifiant + humidité totale).

7. Concentré emballé selon les revendications 1 à 6, dans lequel la xanthane et la LBG sont chacune présentes en une quantité de 40 à 60 % par rapport à la quantité totale de xanthane + LBG, de préférence en une quantité de 45 à 55 %, plus préférentiellement en une quantité d'environ 50 %.

8. Concentré emballé selon les revendications 1 à 7, dans lequel les composants donnant du goût comprennent un ou plusieurs extraits ou concentrés liquides ou solubles d'un ou de plusieurs éléments parmi la viande, le poisson, les herbes, les fruits ou légumes, et/ou les arômes, et/ou l'extrait de levure, et/ou une protéine hydrolysée d'origine végétale, de soja, de poisson ou de viande.

9. Concentré emballé selon l'une quelconque des revendications 1 à 8, dans lequel le sel est le chlorure de sodium.

10. Concentré emballé selon l'une quelconque des revendications 1 à 9, dans lequel l'agent gélifiant se compose essentiellement de la combinaison de xanthane et de gomme de caroube (LBG).

11. Concentré emballé selon l'une quelconque des revendications 1 à 10, dans lequel les composants donnant du goût comprennent de l'extrait de viande.

12. Concentré emballé selon les revendications 1 à 11, dans lequel la teneur en humidité totale du concentré est de 40 à 60 % en poids (par rapport au concentré total emballé).

13. Concentré emballé selon les revendications 1 à 12, dans lequel le concentré a une activité aqueuse a_{w} de 0,7 à 0,78.

14. Concentré emballé selon les revendications 1 à 13, comprenant en outre 0,5 à 30 % (poids par rapport au concentré total) d'un exhausteur de goût choisi dans le groupe constitué par le glutamate monosodique, les 5'-ribotides, les acides organiques ou des mélanges de ceux-ci.

15. Concentré emballé selon les revendications 1 à 14, comprenant 1 à 15 % (poids par rapport au concentré total emballé) d'huile et/ou de graisse émulsifiée ou dispersée.

16. Concentré emballé selon les revendications 1 à 15, dans lequel le concentré est emballé dans un pot ou un tube avec un scellement, de préférence dans un pot scellé.

17. Concentré emballé selon les revendications 1 à 16, dans lequel la portion du concentré une fois emballé est telle que le concentré a un poids (excluant l'emballage) de 2 g à 10 kg, de préférence de 2 g à 250 g, plus préférentiellement de 10 g à 250 g.

18. Concentré emballé selon les revendications 1 à 17, dans lequel le concentré donne un bouillon, un consommé, une soupe, une sauce, un jus par dilution dudit concentré avec un liquide aqueux sous application de chaleur, de préférence en un rapport de 1/15 à 1/50, de préférence de 1/20 à 1/50.

19. Concentré emballé selon les revendications 1 à 18, où 30 g de concentré se dissolvent dans 900 ml d'eau bouillante en moins de 3,5 minutes, de préférence en moins de 3 minutes.

20. Concentré emballé selon les revendications 1 à 19, dans lequel le concentré est un bouillon concentré.

21. Concentré emballé selon les revendications 1 à 19, dans lequel le concentré est un concentré pour l'utilisation en tant que condiment.

22. Concentré emballé selon la revendication 20, dans lequel le bouillon concentré donne un bouillon par dilution dudit bouillon concentré avec un liquide aqueux sous application de chaleur, ledit bouillon concentré comprenant :
- 20 à 80 % d'eau (% en poids par rapport au concentré emballé total),
- 0,1 % à 10 % (% en poids par rapport à la teneur en eau du concentré) d'un agent gélifiant comprenant la combinaison de xanthane et de gomme de caroube (LBG), où la concentration en agent gélifiant doit être calculée sous la forme (quantité d'agent gélifiant) / (quantité d'agent gélifiant + humidité totale),
- 15 à 30 % (% en poids par rapport à la teneur en eau du concentré, de préférence 15 à 26 %) de sel, où la concentration en sel doit être calculée sous la forme (quantité de sel) / (quantité de sel + humidité totale),
- 1 à 30 % (en poids par rapport au concentré emballé total) d'huile et/ou de graisse émulsifiée ou dispersée,
- 0,5 à 60 % (% en poids par rapport à la composition totale) de composants donnant du goût en l'absence de 0,5 à 60 % en poids d'herbes, de légumes, de fruits, de viande, de poisson, de crustacés, ou de particules de ceux-ci (% en poids par rapport au concentré emballé total), et dans lequel le concentré
• a l'apparence ou la rhéologie d'un gel comme cela est exprimé par le rapport du module élastique G' : module visqueux G" d'au moins 1,
• a une activité aqueuse a_{w} de 0,5 à 0,87, et
- dans lequel la portion du concentré une fois emballé est telle que le concentré a un poids (excluant l'emballage) de 2 g à 250 g, de préférence de 10 g à 250 g.

23. Concentré emballé selon la revendication 22, comprenant 1 à 15 % (poids par rapport au concentré total emballé) d'huile et/ou de graisse émulsifiée ou dispersée.

24. Concentré emballé selon la revendication 22 ou 23, dans lequel le bouillon concentré donne un bouillon par dilution dudit bouillon concentré avec un liquide aqueux sous application de chaleur en un rapport de 1/15 à 1/50, de préférence de 1/20 à 1/50.

25. Concentré emballé selon les revendications 1 à 24, dans lequel le sel est le chlorure de sodium.

26. Concentré emballé selon les revendications 1 à 25, dans lequel l'agent gélifiant se compose essentiellement de la combinaison de xanthane et de gomme de caroube (LBG).

27. Procédé de préparation d'un concentré pour la préparation d'un bouillon, d'un consommé, d'une soupe, d'une sauce, d'un jus ou pour l'utilisation comme condiment, ledit concentré comprenant :
- 20 à 80 % d'eau (% en poids par rapport au concentré emballé total),
- 0,1 à 10 % (% en poids par rapport à la teneur en eau du concentré, de préférence 0,2 à 7 %, plus préférentiellement de 0,6 à 3 %) d'un agent gélifiant comprenant la combinaison de xanthane et de gomme de caroube (LBG), où la concentration en agent gélifiant doit être calculée sous la forme (quantité d'agent gélifiant) / (quantité d'agent gélifiant + humidité totale),
- 15 à 30 % (% en poids par rapport à la teneur en eau du concentré, plus préférentiellement 15 à 26 %) de sel, où la concentration en sel doit être calculée sous la forme (quantité de sel) / (quantité de sel + humidité totale),
- 1 à 30 % (en poids par rapport au concentré emballé total) d'huile et/ou de graisse émulsifiée ou dispersée,
- 0,5 à 60 % (% en poids par rapport à la composition totale) de composants donnant du goût en l'absence de 0,5 à 60 % en poids d'herbes, de légumes, de fruits, de viande, de poisson, de crustacés, ou de particules de ceux-ci (% en poids par rapport au concentré emballé total), et dans lequel le concentré
• a l'apparence d'un gel et
• a une activité aqueuse a_{w} de 0,5 à 0,87, et
le procédé comprenant les étapes consistant à mélanger tous les ingrédients, charger le mélange dans l'emballage ou dans des moules, fermer l'emballage, où une étape de chauffage est appliquée avant et/ou pendant et/ou après le chargement dans l'emballage ou les moules.

28. Procédé selon la revendication 27, dans lequel le concentré est un concentré selon les revendications 2 à 26.

29. Procédé selon la revendication 27 ou 28, dans lequel au moins une partie de l'étape de chauffage doit se faire à une température d'au moins 70 °C.

30. Utilisation d'un concentré selon les revendications 1 à 20 ou 22 à 26 pour la préparation d'un bouillon.

31. Utilisation selon la revendication 30, dans laquelle le concentré est un bouillon concentré et donne un bouillon par dilution dudit bouillon concentré avec un liquide aqueux sous application de chaleur, ledit bouillon concentré comprenant :
- 20 à 80 % d'eau (% en poids par rapport au concentré emballé total),
- 0,1 % à 10 %, de préférence 0,2 % à 7 % (% en poids par rapport à la teneur en eau du concentré) d'un agent gélifiant comprenant la combinaison de xanthane et de gomme de caroube (LBG), où la concentration en agent gélifiant doit être calculée sous la forme (quantité d'agent gélifiant) / (quantité d'agent gélifiant + humidité totale),
- 15 à 30 % (% en poids par rapport à la teneur en eau du concentré, de préférence 15 à 26 %) de sel, où la concentration en sel doit être calculée sous la forme (quantité de sel) / (quantité de sel + humidité totale),
- 1 à 30 % (en poids par rapport au concentré emballé total) d'huile et/ou de graisse émulsifiée ou dispersée,
- 0,5 à 60 % (% en poids par rapport à la composition totale) de composants donnant du goût en l'absence de 0,5 à 60 % en poids d'herbes, de légumes, de fruits, de viande, de poisson, de crustacés, ou de particules de ceux-ci (% en poids par rapport au concentré emballé total), et dans lequel le concentré
• a l'apparence ou la rhéologie d'un gel comme cela est exprimé par le rapport du module élastique G' : module visqueux G" d'au moins 1, et
• a une activité aqueuse a_{w} de 0,5 à 0,87, et
- dans lequel la portion du concentré une fois emballé est telle que le concentré a un poids (excluant l'emballage) de 2 g à 250 g, de préférence de 10 g à 250 g.

32. Utilisation selon la revendication 31, dans laquelle le bouillon concentré comprend 1 à 1-5 % (poids par rapport au concentré total emballé) d'huile et/ou de graisse émulsifiée ou dispersée.

33. Utilisation selon la revendication 32 ou 33, dans lequel le bouillon concentré donne un bouillon par dilution dudit bouillon concentré avec un liquide aqueux sous application de chaleur en un rapport de 1/15 à 1/50, de préférence de 1/20 à 1/50.

34. Utilisation d'un concentré selon les revendications 1 à 26 pour l'utilisation comme condiment, où ladite utilisation comprend le retrait du concentré de son emballage, et l'addition à la nourriture ou à un plat, soit pendant soit après sa préparation, l'application ultérieure de chaleur et l'agitation de la nourriture ou du plat avec ce concentré.
